(19) Europäisches Patentamt
European Patent Office
Office européen des brevets

(11) **EP 1 504 177 B1**

(12) **EUROPÄISCHE PATENTSCHRIFT**

(45) Veröffentlichungstag und Bekanntmachung des Hinweises auf die Patenterteilung:
**13.02.2008 Patentblatt 2008/07**

(21) Anmeldenummer: **03708268.2**

(22) Anmeldetag: **26.03.2003**

(51) Int Cl.:
*F02B 37/04* (2006.01)    *F02B 37/10* (2006.01)
*F02B 37/14* (2006.01)    *F02B 37/22* (2006.01)
*F02B 37/24* (2006.01)    *F01D 17/16* (2006.01)

(86) Internationale Anmeldenummer:
**PCT/EP2003/003118**

(87) Internationale Veröffentlichungsnummer:
**WO 2003/095812 (20.11.2003 Gazette 2003/47)**

(54) **VARIABLER, ZUSÄTZLICH ANGETRIEBENER ABGASTURBOLADER EINER BRENNKRAFTMASCHINE**

VARIABLE, EXHAUST-GAS TURBOCHARGER WITH AN AUXILIARY DRIVE FOR AN INTERNAL COMBUSTION ENGINE

TURBOCOMPRESSEUR A GAZ D'ECHAPPEMENT, A GEOMETRIE VARIABLE ET A ENTRAINEMENT SUPPLEMENTAIRE POUR UN MOTEUR A COMBUSTION INTERNE

(84) Benannte Vertragsstaaten:
**DE FR GB IT**

(30) Priorität: **11.05.2002 DE 10221014**

(43) Veröffentlichungstag der Anmeldung:
**09.02.2005 Patentblatt 2005/06**

(73) Patentinhaber: **Daimler AG**
**70327 Stuttgart (DE)**

(72) Erfinder:
• **FINGER, Helmut**
**70771 Leinfelden-Echterdingen (DE)**
• **FLEDERSBACHER, Peter**
**70619 Stuttgart (DE)**
• **STUTE, Manfred**
**73730 Esslingen (DE)**
• **SUMSER, Siegfried**
**70184 Stuttgart (DE)**

(56) Entgegenhaltungen:
| | |
|---|---|
| DE-A- 10 061 847 | DE-C- 19 955 508 |
| FR-A- 2 396 869 | GB-A- 2 118 621 |
| GB-A- 2 172 340 | US-A- 5 025 629 |
| US-A- 5 560 208 | US-A- 5 611 202 |

**Beschreibung**

Die Erfindung bezieht sich auf einen variablen Abgasturbolader einer Brennkraftmaschine mit einer Abgasturbine und einem Verdichter mit mindestens jeweils einem Stellelement im Ansaugbereich. Der Abgasturbolader ist durch ein Gehäuse und ein über eine Welle mit einem Turbinenrad verbundenes Verdichterrad gebildet. Dem Turbinenrad wird mittels eines Abgasstroms ein erstes Drehmoment zugeführt.

Seit Anfang der Entwicklung von aufgeladenen Brennkraftmaschinen für den Fahrzeugeinsatz stellt die Verbesserung des instationären Verhaltens, im Besonderen bei PKW-Fahrzeugen, ein zentrales Thema dar. Das instationäre Verhalten einer aufgeladenen Brennkraftmaschine wird maßgeblich durch die Eigenschaften des Abgasturboladers bestimmt. Die Hauptentwicklungsrichtung der Turboladergestaltung war neben der Schaffung der Variabilität auf der Turbinenseite die Minimierung der Rotormasse bei gleichzeitiger Steigerung der maximalen Drehzahlen der Abgasturbolader. Das bedeutet, daß mit steigenden Aufladegraden, die in Zukunft im Zusammenhang mit der Emissionsbeeinflussung immer notwendiger werden, sehr hohe Drehzahlspannen des Abgasturboladers im transienten Betrieb, z. B. im Stadtverkehr, permanent überwunden werden müssen.

Die positive Wirkungsgradbeeinflussung der Abgasturbolader wurde für den PKW-Einsatz gegenüber den Verbesserungsmaßnahmen bzgl. des instationären Verhaltens durch Absenkung der Radvolumina stark vernachlässigt. Das Wirkungsgradpotenzial der Turbolader, das für günstige Eigenschaften von zukünftigen verbrauchsarmen Fahrzeugen mit entscheidend ist, kann bei der laufenden Entwicklungsrichtung an den Aufladeaggregaten zur Verbesserung des instationären Verhaltens und der Steigerung der spezifischen Motorleistung so nicht entfaltet werden.

Es ist bereits ein variabler Abgasturbolader aus der DE 199 55 508 C1 bekannt. Es wird eine Brennkraftmaschine mit einem Abgasturbolader beschrieben, der eine Abgasturbine und einen Verdichter zur Erzeugung komprimierter Ladeluft umfaßt. Zusätzlich weist die Brennkraftmaschine eine luftgetriebene Turbine auf, die mit dem Verdichter drehverbunden ist und der über ein stellbares Sperrorgan Verbrennungsluft zuführbar ist. Der Turbinenauslaß ist über einen Verbindungskanal mit dem Ansaugtrakt stromab des Verdichters verbunden. Die Brennkraftmaschine weist eine Regel- und Steuereinheit zur Erzeugung von Steuersignalen auf, die das Sperrorgan einstellen.

Es ist ein stromauf des Verdichters vom Ansaugtrakt abzweigender Zusatzkanal zum Lufteinlaß der luftgetriebenen Turbine vorgesehen. Über das Sperrorgan ist die Luftzufuhr in den Zusatzkanal und in den Verdichtereinlaß einstellbar. Im niederen Lastbereich ist für den Fall, daß der Soll-Ladedruck einen Schwellenwert unterschreitet, in der Regel- und Steuereinheit ein Stellsignal erzeugbar, über welches das Sperrorgan in eine den Zusatzkanal öffnende und die Luftzufuhr zum Verdichtereinlaß reduzierende Position verstellbar ist.

Der Erfindung liegt die Aufgabe zugrunde, einen variablen Abgasturbolader derart auszubilden und anzuordnen, daß der Wirkungsgrad gesteigert wird und sogenannte Turbolöcher vermieden werden.

Entgegen dem weiter laufenden Entwicklungstrend, der die sehr hohen Drehzahlschwankungen des Abgasturboladers am aufgeladenen Motor als gegeben ansieht, sollen die Überlegungen, die der Erfindung zugrunde liegen, dazu führen, daß sich nur noch kleinere Drehzahlschwankungen des Turboladers auf hohem Drehzahlniveau im gesamten Motorkennfeld einstellen.

Gelöst wird die Aufgabe erfindungsgemäß dadurch, daß dem Abgasturbolader mittels eines Zusatzaggregats direkt über das Verdichterrad, das Turbinenrad oder die verbindende Welle ein zweites Drehmoment zugeführt wird, so daß eine für das gesamte Motorkennfeld des Abgasturboladers vorgegebene Solldrehzahl im stationären Bereich über einen bestimmten Betrag hinaus nicht über- oder unterschritten wird. Hierdurch wird erreicht, daß die Massenträgheit des Abgasturboladers an nachteiliger Bedeutung verliert, da mit annähernd konstanter Drehzahl des Abgasturboladers über dem gesamten Motorkennfeld bzw. dem Kennfeld der Brennkraftmaschine die bisherigen Drehzahlschwankungen nicht mehr zu überwinden sind. Die auf der Abgasseite zur Verfügung stehende Druckenergie wird zum Aufladen genutzt, der Energiebetrag, der bisher zum Beschleunigen des Abgasturboladers erforderlich war, steht ergänzend zum Aufladen zur Verfügung.

Bei herkömmlichen Aufladesystemen sind Drehzahlspannen von der unteren Drehzahl 10.000 l/min bis zur oberen Drehzahl 200.000 l/min, also eine Differenz von 190.000 Umdrehungen pro Minute, nicht unüblich. Die erfindungsgemäße Ausbildung und Regelung erlaubt Drehzahlschwankungen bis zu einer Differenz von maximal 30.000 Umdrehungen pro Minute relativ zu einer stationären Solldrehzahl des Abgasturboladers.

Von besonderer Bedeutung ist für die vorliegende Erfindung, daß das Zusatzaggregat als Kompressor ausgebildet ist, der elektrisch oder mechanisch angetrieben ist. Die über einen Ladelufteinlaß angesaugte und komprimierte Ladeluft wird direkt über einen Zusatzkanal auf das Verdichterrad geleitet. Alternativ oder in Kombination dazu wird die über den Ladelufteinlaß angesaugte und komprimierte Ladeluft über einen Kanal der Turbine auf das Turbinenrad geleitet.

Der somit eingeleitete Masse- und Impulsstrom erzeugt das zusätzliche Drehmoment in Form einer aerodynamischen Kopplung zum Beschleunigen oder zum Halten des variablen Abgasturboladers auf einer Solldrehzahl. Um den Masse- und Impulsstrom entsprechend zu steuern, wird die Drehzahl des Abgasturboladers ständig gemessen und von einer Regel- und Steuereinheit verarbeitet. Der Kompressor ist mittels eines Keilriemens über die Kurbelwelle der Brennkraftmaschine oder mittels eines Elektromotors angetrieben. Um den Kompressor jederzeit zu- und abzuschalten, ist zusätzlich zum Keilriemenantrieb eine Kupplung zwischen Antriebsrad und Kompressorwelle vorgesehen.

Im Zusammenhang mit der erfindungsgemäßen Ausbildung und Anordnung ist es von Vorteil, daß das Zusatzaggregat als Elektromotor ausgebildet, der direkt auf die Welle des Abgasturboladers ein Drehmoment einleitet. Hierzu ist der Elektromotor über eine Kupplung und ein Getriebe mit der Welle des Abgasturboladers verbunden. Über die Regel- und Steuereinrichtung wird die Kupplung und die Drehzahl des Elektromotors entsprechend geregelt, um den Abgasturbolader auf die Solldrehzahl zu beschleunigen oder ihn im Bereich dieser Drehzahl zu halten.

Zur Reduzierung größerer Verluste ist die Welle des Abgasturboladers mittels einer Luftlagerung im Gehäuse gelagert. Alternativ ist eine Kugellagerung, eine Gleitlagerung oder eine Magnetlagerung vorgesehen.

Um das zweite Drehmoment direkt auf das Verdichterrad zu leiten und die gewünschte Verdichter- oder Turbinenbetriebsweise zu ermöglichen, ist es vorteilhaft, daß der Verdichter einen Haupteinströmkanal aufweist, über den in beiden Betriebsweisen die Ladeluft einströmt. Zudem verzweigt der Haupteinströmkanal in einen axialen Einströmkanal und in einen Zusatzkanal. Der axiale Einströmkanal ist über eine Drosseleinrichtung in seinem Querschnitt veränderbar.

In diesem Zusammenhang ist es vorteilhaft, daß das Verdichterrad im Eintrittsbereich axial und im Austrittsbereich radial ausgebildet ist.

Der axiale Einströmkanal kann somit während des Turbinenbetriebs des Verdichters maximal gedrosselt werden, wobei die Ladeluft nur über den Haupteinströmkanal einströmt. Ein Überdrehen des Abgasturboladers in dieser Betriebsweise wird mit Hilfe dieser Drosselung vermieden. Während des Verdichterbetriebs sind die Ladeluftströme ebenfalls über die Drosseleinrichtung regelbar.

Ferner ist es vorteilhaft, daß der axiale Zusatzkanal in Strömungsrichtung vor dem Verdichterrad in einen radialen Zusatzkanal mündet. Die aus dem Zusatzkanal einströmende Ladeluft wird durch das Verdichterrad in der Strömungsrichtung umgelenkt. Im radialen Zusatzkanal ist ergänzend ein radiales Vorleitgitter vorgesehen. Dieses radiale Vorleitgitter kann verstellbar ausgebildet sein.

Die durch die erfindungsgemäße Regelung der Drehzahlen des Abgasturboladers möglich gewordene Vergrößerung der Durchmesser des Turbinenrades und des Verdichterrades führt dazu, daß sowohl der Verdichter als auch die Abgasturbine rein radial ausgebildet werden können.

Eine weitere Möglichkeit ist gemäß einer Weiterbildung, daß im Gehäuse in Strömungsrichtung nach dem Verdichterrad als weiteres Stellelement ein radiales Diffusorgitter mit Diffusorschaufeln angeordnet ist. Die Diffusorschaufeln sind in einer einfachen Ausführungsform als unverstellbare Festgeometrie ausgebildet.

In einer bevorzugten Ausführungsform eines erfindungsgemäßen Abgasturboladers ist vorgesehen, die Diffusorschaufeln ebenfalls verstellbar und feststellbar auszubilden. Das Verdichterrad ist hierzu als reines Radialverdichterrad ausgebildet.

Auf der Abgasseite ist es erfindungsgemäß vorteilhaft, daß die Abgasturbine eine zur Drehachse des Turbinenrades radiale und eine axiale Zuströmung aufweist. Beide Zuströmungen sind wahlweise mit einem verstellbaren Abgas-Leitgitter bestückt.

In einer weiteren Ausgestaltung ist vorgesehen, daß die radiale Zuströmung mittels eines variablen Turbinenquerschnitts drosselbar ist. Der variable Turbinenquerschnitt ist axial im Gehäuse gelagert und regelbar.

Gemäß einer bevorzugten Ausführungsform der erfindungsgemäßen Lösung ist schließlich vorgesehen, daß der variable Abgasturbolader in ein Regel- und Steuersystem einer Brennkraftmaschine eingebracht ist. Das Regel- und Steuersystem weist eine Regel und Steuereinheit auf, die Istwertsignale von mehreren Drucksensoren im Regel- und Steuersystem und beispielsweise die Istdrehzahl des Abgasturboladers von der Brennkraftmaschine aufnimmt. Die Regel- und Steuereinheit wiederum sendet entsprechende Steuersignale an eine oder mehrere Steuereinrichtungen des Systems. Diese Steuereinrichtungen steuern in einer bevorzugten Ausführungsform das Zusatzaggregat, die Drosseleinrichtung im Haupteinströmkanal, ein Abgasrückführungsventil und den variablen Turbinenquerschnitt.

Es ist vorgesehen, das System auch unter Verwendung des Zusatzaggregats mit einem reinen Radialverdichter zu bestücken. Bei diesem Radialverdichter ist jeweils ein Stellelement oder Diffusorgitter vor und nach dem Verdichterrad vorgesehen.

Die erfindungsgemäße Vorrichtung ermöglicht beispielhaft ein Verfahren zum Regeln der Drehzahl eines variablen Abgasturboladers. In einem ersten Schritt wird die Drehzahl des Abgasturboladers innerhalb des Motorkennfeldes auf eine feste mittlere Solldrehzahl eingestellt. Innerhalb des Motorkennfeldes weicht die Drehzahl mit Hilfe des durch das Zusatzaggregat erzeugten Drehmoments maximal um 20 % von der mittleren vorgegebenen Solldrehzahl ab. Das Beschleunigen des Abgasturboladers ist somit nur noch eingeschränkt notwendig.

Zum Erreichen der erfindungsgemäß konstanten Drehzahl bzw. zum Beschleunigen des Abgasturboladers ist vorgesehen, daß maximal 10 % der Verdichternennleistung durch das Zusatzaggregat an den variablen Abgasturbolader abgegeben werden. Dadurch wird deutlich, daß das Zusatzaggregat nur hilfsweise zum Einsatz kommt und nicht zur Grundbeschleunigung des Abgasturboladers dient.

Weitere Vorteile und Einzelheiten der Erfindung sind in den Patentansprüchen und in der Beschreibung erläutert und in den Figuren dargestellt. Es zeigt:

Figur 1     eine schematische Anordnung eines Systems zur Regelung einer Brennkraftmaschine,

Figur 2     einen Schnitt durch einen axialen und radialen Eintrittsbereich einer Abgasturbine,

Figur 3     ein Diagramm des Turbinenwirkungsgrades in Abhängigkeit des Verhältnisses von mittlerer stationärer Umfangsgeschwindigkeit zu isentroper Geschwindigkeit,

Figur 4     ein Regelschema des drehzahlstationären Aufladens,

Figur 5     eine Schnittzeichnung eines Turboladers, der zum drehzahlstationären Aufladen geeignet ist.

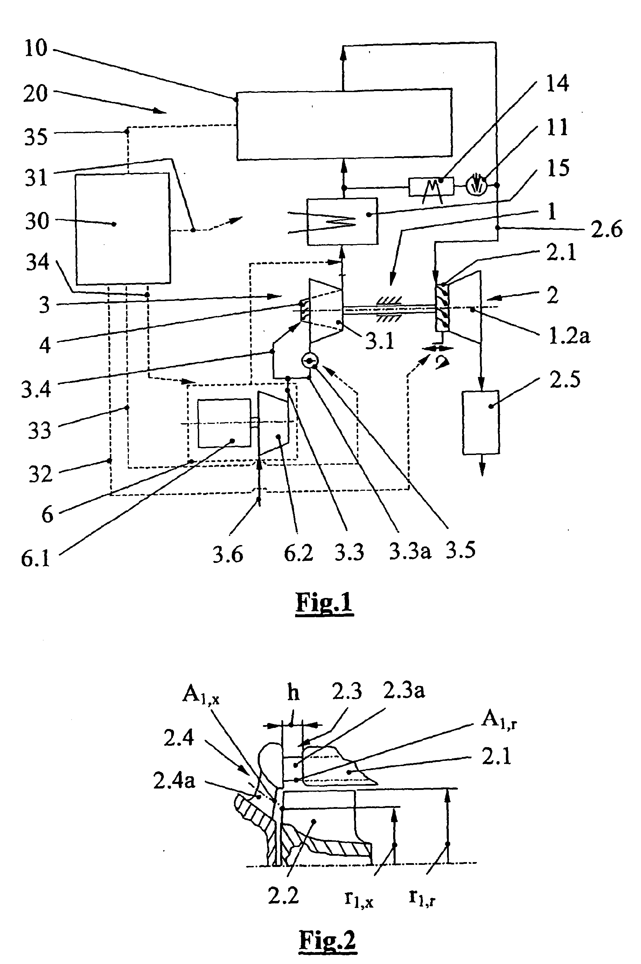

Das Schema gemäß Figur 1 zeigt einen in ein Regel- und Steuersystem 20 einer Brennkraftmaschine 10 eingebundenen Abgasturbolader 1. Der Abgasturbolader 1 weist eine Abgasturbine 2 mit einem verstellbaren Turbinenquerschnitt 2.1 nach dem im Einlaß vorgesehenen Kanal 2.6 auf. Der Abgasturbine 2 ist ein Katalysator 2.5 nachgeschaltet.

Ein Verdichter 3 weist einen Haupteinströmkanal 3.3 und ein Verdichterrad 3.1 auf. Der Haupteinströmkanal 3.3 verzweigt in einen Einströmkanal 3.3a und in einen Zusatzkanal 3.4. Der Einströmkanal 3.3a ist über eine Drosseleinrichtung 3.5 regelbar. Vor dem Verdichterrad 3.1 ist im Zusatzkanal 3.4 ein radiales Vorleitgitter 4 vorgesehen.

In Abhängigkeit des Betriebszustandes Aufladen oder Saugen wird über die Drosseleinrichtung 3.5 die Ladeluftzufuhr in den Einströmkanal 3.3a geregelt. Im Turbinenbetrieb des Verdichters 3 ist der Einströmkanal 3.3a mittels der Drosseleinrichtung 3.5 geschlossen.

Zwischen Ladelufteinlaß 3.6 und Haupteinströmkanal 3.3 ist beispielsweise ein Kompressor 6 eingebracht. Der Kompressor 6 ist mechanisch oder elektrisch angetrieben und weist ein Reservevolumen als Puffer auf. Mittels dieser aerodynamischen Kopplung wird über das Verdichterrad 3.1 ein zusätzliches Drehmoment eingeleitet. Der Kompressor 6 besteht aus einem Getriebe 6.1 und einer Pumpe 6.2. Die Hauptaufgabe der Einspeisung der zusätzlichen Energie durch den Kompressor 6 ist, ein Energiedefizit der Abgasturbine 2 innerhalb eines Motorbetriebspunktes der Brennkraftmaschine 10 auszugleichen. Damit wird die Drehzahl des Abgasturboladers 1 nahezu konstant auf der stationären Drehzahl $n_{ATL,St}$ im vorgegebenen Drehzahlbereich gehalten. Die stationäre Drehzahl $n_{ATL,St}$ bewegt sich zwischen einer unteren und einer oberen Drehzahl $n_u < n_{ATL,St} < n_o$.

Der zusätzliche Kompressor 6 kann auch nach dem Verdichter 3 angeordnet sein. Im Turbinen- bzw. Kaltluftturbinenbetrieb wird in diesem Fall durch die Durchsaugwirkung das Druckverhältnis im Turbinentrieb des Verdichters 3 verstärkt. In dieser nachgeschalteten Version wird die Eintrittstemperatur $T_1$ des Verdichters 3 für den Turbinentrieb nicht vorteilhaft erhöht.

Eine Regel- und Steuereinheit 30 nimmt Istwertsignale 35 der Brennkraftmaschine 10 auf und sendet Steuersignale 31, 32, 33, 34 an die Regelglieder der einzelnen Systemkomponenten. Diese sind der Kompressor 6, die Drosselklappe 3.5, der verstellbare Turbinenquerschnitt 2.1 und ein Abgasrückführungsventil 11.

Die Ladungswechselzustandsgrößen, die vom Verhalten des Abgasturboladers 1 mitbestimmt werden, erfordern in der Betriebsweise der Abgasrückführung eine Überwachung des Abgasrückführungsventils 11. Von besonderem Interesse sind als Ladungswechselzustandsgrößen verschiedene Drücke innerhalb des Regel- und Steuersystems 20 der Brennkraftmaschine 10.

Das Abgasrückführungsventil 11 befindet sich in der gezeigten Anordnung vor einem Abgasrückführungskühler 14. Das Abgas wird zur Vermeidung der Verschmutzung nach einem Ladeluftkühler 15 der Verbrennungsluft nahe vor dem Eintritt in die Brennkraftmaschine 10 zugemischt.

In Figur 2 ist der Eintrittsbereich der Abgasturbine 2 im Schnitt dargestellt. Ein Turbinenrad 2.2 wird über eine axiale Zuströmung 2.4 mit einem axialen Eintrittsquerschnitt $A_{1,x}$ und eine radiale Zuströmung 2.3 mit einem radialen Einlaßquerschnitt $A_{1,r}$ beschickt. In die radiale Zuströmung 2.3 ist ein radiales Abgas-Vorleitgitter 2.3a eingebracht. Der Querschnitt der radialen Zuströmung weist eine variable Höhe $h$ auf. Der variable Turbinenquerschnitt 2.1 ist in axialer Richtung verstellbar. In die axiale Zuströmung 2.4 ist ein axiales Abgas-Vorleitgitter 2.4a eingebracht.

Zur Berechnung eines Turbinenwirkungsgrades $\eta$ ist dem Turbinenrad 2.2 ein mit der axialen Zuströmung 2.4 korrespondierender axialer Turbinenradius $r_{1,x}$ und ein mit der radialen Zuströmung 2.3 korrespondierender radialer Turbinenradius $r_{1,r}$ zugeordnet.

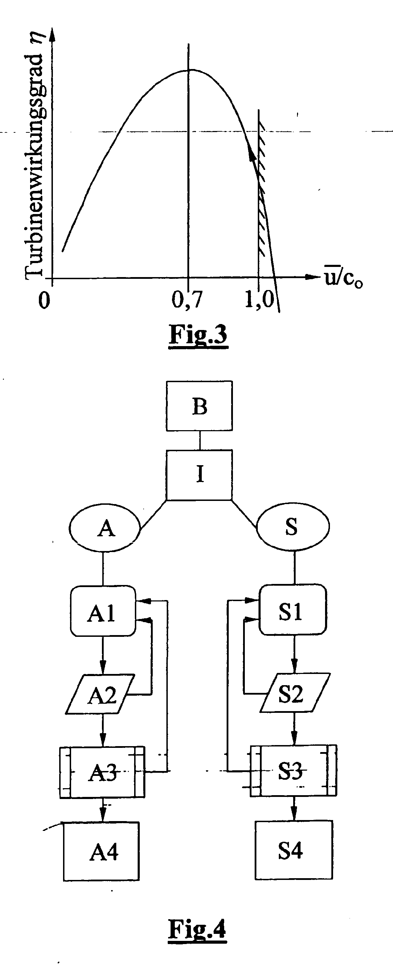

In Figur 3 ist der Verlauf des Wirkungsgrades $\eta$ in Abhängigkeit des Verhältnisses $\bar{u}/c_0$, d. h. des Verhältnisses mittlerer stationärer Umfangsgeschwindigkeit $\bar{u}$ zu isentroper Geschwindigkeit $c_0$ dargestellt. Die mittlere stationäre Umfangsgeschwindigkeit $\bar{u}$ berechnet sich aus dem Produkt des mittleren Radius des Turbinenrades 2.2 und einer stationären Winkelgeschwindigkeit zu $\bar{u} = \bar{r} \cdot \omega_{stationär}$

In weiten Motorbetriebsbereichen bei niederer und mittlerer Last ist die isentrope Geschwindigkeit $c_0$ bzw. das Turbinendruckverhältnis und die Turbineneintrittstemperatur relativ niedrig. Daraus ergibt sich ein großer Wert für das Verhältnis $\bar{u}/c_0$. Das Auslegungsziel

hinsichtlich eines hohen Wirkungsgrades η liegt bei $\frac{\overline{u}}{c_0} \leq 1$. Durch Auslegung der Abgasturbine 2 und durch geeignete Wahl eines Kombinationstyps eines Abgasturboladers 1 kann die mittlere stationäre Umfangsgeschwindigkeit $\overline{u}$ gedrückt werden. Ein Optimum des Verhältnisses $\frac{\overline{u}}{c_0}$ liegt beim vorliegenden Ausführungsbeispiel bei einem Wert von 0,7.

Ein entsprechend der Figur 3 ausgelegter Abgasturbolader 1 wird nach einem in Figur 4 dargestellten erfindungsgemäßen Regelschema geregelt. Das Regelschema ist abhängig von drei Drücken: dem Druck $p_0$ vor dem Verdichter 3, dem Druck $p_1$ vor dem Verdichterrad 3.1 und dem Druck $p_2$ nach dem Verdichterrad

3.1. Generell gilt: $\frac{p2}{p0} = \frac{p2}{p1} * \frac{p1}{p0}$.

Im Saugbetrieb soll gelten: $\frac{p2}{p1} < 1$ und

$\frac{p1}{p0} \geq 1$ oder $\frac{p1}{p0} < 1$ und $\frac{p2}{p0} < 1$.

Im Aufladebetrieb soll gelten: $\frac{p2}{p1} \geq 1$ und

$\frac{p1}{p0} \geq 1$ oder $\frac{p1}{p0} < 1$ und $\frac{p2}{p0} > 1$.

Mit der Stellung des Fahrpedals wird ein Soll-Betriebspunkt $B$ und somit ein Soll-Massestrom $\dot{m}_{SOLL}$ angefordert. In einem darauffolgenden Schritt $I$ wird die Betriebspunktlage identifiziert. Die Identifikation erfolgt anhand des Verhältnisses $\frac{p2}{p1}$ des Verdichter-Ausgangsdrucks zu Verdichter-Eingangsdruck vor und nach dem Verdichterrad 3.1.

Die Identifikation Aufladebereich $A$ erfolgt bei

$\frac{p2}{p1} > 1$.

Im Betriebspunkt $A_1$ befindet sich der Verdichter 3 im Mitdrallbetrieb, das radiale Vorleitgitter 4 ist in Drosselstellung, in welcher der Ist-Massestrom $\dot{m}_{IST}$ des Motors ungefähr dem Soll-Massestrom $\dot{m}_{SOLL}$ des Motors entspricht, $\dot{m}_{IST} \approx \dot{m}_{SOLL}$.

Die Abgasturbine 2 wird in einem weiteren Schritt $A_2$ derart geregelt, daß die stationäre Drehzahl $n_{ATL,St}$ des Abgasturboladers 1 sich zwischen einer unteren und einer oberen Drehzahl innerhalb des Drehzahlbandes $n_u < n_{ATL.St} < n_o$ bewegt.

Wenn die stationäre Drehzahl $n_{ATL.St}$ nach Schritt $A_3$ unter die untere Drehzahl $n_u$ so weit abfällt,

daß $n_{ATL,St} < n_u$ ist, dann ist die Zufuhr von Fremdenergie mittels des Zusatzaggregats 6 notwendig und eine mögliche Bypasssierung des Zusatzaggregats wäre hinfällig. Dadurch steigt der Druck $p_1$ vor dem Verdichterrad 3.1 und ist wieder größer als der Druck $p_0$ vor dem Verdichter 3, also $\frac{p1}{p0} > 1$. Die Regelung wiederholt sich entsprechend.

Der Punkt $A_4$ stellt das Ergebnis des Prozesses dar. Ein Soll-Betriebspunkt ist erreicht, $\dot{m}_{IST} \approx \dot{m}_{SOLL}$, $\frac{p2}{p0} > 1$, $n_u < n_{ATL,St} < n_o$. Der Verdichter 3 befindet sich im Aufladebetrieb mit abgestimmtem Mitdrall. Der Mitdrall sinkt bei hohen Aufladegraden. Die Abgasturbine 2 befindet sich im entsprechenden Aufstrom und in einem günstigen Betriebspunkt.

Zusammengefaßt bedeutet dies, daß die Androsselung und die Mitdrallstärke des Verdichters 3 wie folgt eingestellt werden: Der Motormassenstrom $\dot{m}_{SOLL}$ muß möglich sein, wenn der verstellbare Turbinenquerschnitt 2.1 der Abgasturbine 2 eine Position und somit einen Querschnitt aufweist, in dem das Leistungsgleichgewicht das Drehzahlband $n_u < n_{ATL,St} < n_o$ zuläßt. Im Falle, daß die untere Schranke $n_u$ der stationären Drehzahl $n_{ATL,St}$ des Abgasturboladers 1 unterschritten wird, wird durch zunehmende Fremdenergie dem entgegengewirkt, bis der Abgasturbolader 1 im Drehzahlband nahezu stationär das hohe Drehzahlniveau hält.

Die Identifikation Saugbereich $S$ erfolgt bei

$\frac{p2}{p1} < 1$.

Im Betriebspunkt $S_1$ befindet sich der Verdichter 3 durch das radiale Vorleitgitter 4 in Turbinenbetriebsweise. Auch hier ist $\dot{m}_{IST} \approx \dot{m}_{SOLL}$.

Die Abgasturbine 2 wird in einem weiteren Schritt $S_2$ derart geregelt, daß die stationäre Drehzahl $n_{ATL,St}$ des Abgasturboladers 1 sich innerhalb des Drehzahlbandes $n_u < n_{ATL,St} < n_o$ bewegt.

Wenn die stationäre Drehzahl $n_{ATL,St}$ nach Schritt $S_3$ so weit abfällt, daß $n_{ATL,St} < n_u$ ist, dann ist die Zufuhr von Fremdenergie mittels des Zusatzaggregats 6 notwendig. Damit stellt sich wieder der Zustand $\frac{p1}{p0} > 1$ ein. Die Regelung wiederholt sich entsprechend.

Im Ergebnis $S_4$ wird nach diesem Prozeß ein Soll-Betriebspunkt erreicht, in dem $\dot{m}_{IST} \approx \dot{m}_{SOLL}$, $\frac{p2}{p0} < 1$, $n_u < n_{ATL,St} < n_o$. Der Verdichter 3 befindet sich in einer Betriebsweise mit abgestimmtem Mitdrall. Der Mitdrall sinkt bei Lastanhebung. Die Abgasturbine 2 befindet sich im entsprechenden Aufstrom und einem günstigen Betriebspunkt. Der Verdichter befindet sich im Saugmotorenbetriebsbereich weitgehend in der Turbinenbetriebsweise.

Im Saugmotorenbetriebsbereich wird über die Drosselklappe 3.5 oder die verstellbaren radialen Vorleitgitter 4 als sogenannte Mitdralleinrichtung ein Druckgefälle initiiert, wodurch der Verdichter 3 in die Kaltluftturbinenbetriebsweise übergeht. Jetzt ist die Lagerung einer Welle 1.2 der einzige Leistungsabnehmer, da der Verdichter 3 keine Leistung mehr aufnimmt. Die Zuspeisung von Fremdenergie erfolgt nur, wenn die hohe Stationärdrehzahl $n_{ATL,St}$ des Abgasturboladers 1 unter die untere Schranke $n_u$ zu fallen droht. Ein Überdrehen des Abgasturboladers 1 wird im Wesentlichen durch ein Öffnen des verstellbaren Turbinenquerschnitts 2.1 verhindert.

Der für die Regelung schwierigste Bereich liegt beim Verhältnis $\frac{p2}{p0} = 1,0$ .

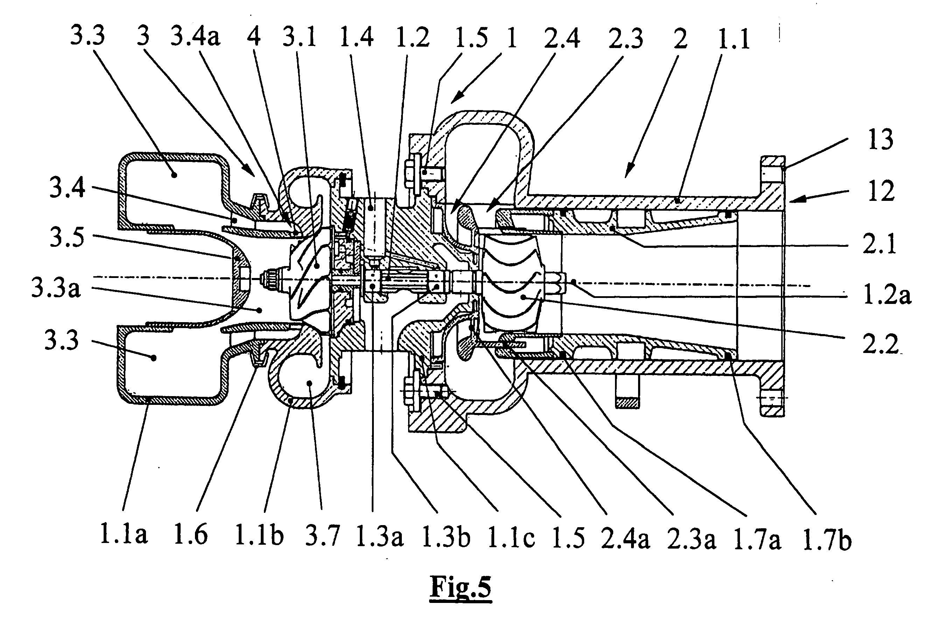

In Figur 5 ist eine Schnittzeichnung eines Abgasturboladers 1 dargestellt, der für das drehzahlstationäre Aufladen geeignet ist. Die Abgasturbine 2 ist über die Welle 1.2 mit dem Verdichter 3 drehverbunden. Die Eingangsseite des Verdichters 3 wird durch einen ersten Gehäusebereich 1.1a und die Ausgangsseite durch einen zweiten Gehäusebereich 1.1b gebildet. Die Welle 1.2 ist in einem dritten Gehäusebereich 1.1c gelagert. Das Gehäuse 1.1 bildet Ein- und Ausgangsbereich der Turbine.

Das Turbinenrad 2.2 erfährt gemäß Figur 2 eine radiale Zuströmung 2.3 und eine axiale Zuströmung 2.4, in die jeweils ein Abgas-Vorleitgitter 2.3a, 2.4a eingebracht ist. Der Querschnitt der radialen Zuströmung 2.4 ist mittels des Turbinenquerschnitts 2.1 in der Größe veränderbar. Somit wird die Schaufelhöhe des radialen Abgas-Vorleitgitters 2.3a und damit das Aufstauverhalten der Abgasturbine 2 beeinflußt. Der verstellbare Turbinenquerschnitt 2.1 ist axial in Richtung der Drehachse 1.2 in einem Gehäuse 1.1 des Abgasturboladers 1 geführt und mittels Dichtungen 1.7a, 1.7b abgedichtet. Die Gehäuseteile 1.1a, 1.1b sind mittels Klemmschellen 1.6 aneinandergeflanscht. Das Gehäuse 1.1c ist mittels Schrauben 1.5 mit dem Gehäuse 1.1 verbunden.

Das Verdichterrad 3.1 wird über den Zusatzkanal 3.4 radial und über den Einströmkanal 3.3a axial gespeist. Beide Kanäle zweigen vom Haupteinströmkanal 3.3 ab. Der Einströmkanal 3.3a ist über eine in axialer Richtung verstellbare Drossel 3.5 regelbar.

Der Zusatzkanal 3.4 ist über ein radiales Vorleitgitter 4 regelbar, das in Strömungsrichtung direkt vor dem Verdichterrad 3.1 eingebracht ist. Die Kombination des radialen Vorleitgitters 4 mit der Drosselklappe 3.5 ermöglicht einen Kaltluftturbinenbetrieb der Verdichterseite. Nach dem Verdichten strömt die Ladeluft durch einen Auslaß 3.7 in die Brennkraftmaschine 10.

Wie aus Figur 5 ersichtlich, wurde die Abgasturbine 2 hinsichtlich der beschriebenen Wirkungsgradoptimierung gestaltet, was das relativ große Radvolumen erfordert. Bei dem erfindungsgemäßen Konzept des stationären Turboaufladens kann die somit erhöhte Massenträgheit neben dem Wirkungsgradvorteil auch vorteilhaft als Energiespeicher dienen. Die Nachteile der Massenträgheit werden erfindungsgemäß durch relativ konstante Drehzahlen beseitigt.

Die Lager 1.3a, 1.3b der welle 1.2 sind als Gleitlager ausgebildet, die über Schmierkanäle 1.4 mit Öl versorgt werden. Das Gehäuse 1.1 weist einen Flansch 12 auf, an dem das weitere Abgasrohr mittels einer Flanschverbindung 13 befestigt wird.

## Patentansprüche

1. Variabler Abgasturbolader (1) für eine Brennkraftmaschine (10) mit einer Abgasturbine (2) mit variablem Turbinenquerschnitt (2.1) und einem Verdichter (3) mit einem radialem Vorleitgitter (4) im Ansaugbereich, wobei der Abgasturbolader (1) ein Gehäuse (1.1) mit einem Haupteinströmkanal (3.3) und ein über eine Welle (1.2) mit einem Turbinenrad (2.2) verbundenes Verdichterrad (3.1) aufweist, dem Turbinenrad (2.2) mittels eines Abgasstroms ein erstes Drehmoment zugeführt wird, der Abgasturbolader (1) mit einem Zusatzaggregat (6) mit einem Ladelufteinlass (3.6) in Wirkverbindung steht, über das dem Abgasturbolader (1) über ein oder mehrere Bauteile wie Verdichterrad (3.1), Turbinenrad (2.2) oder Welle (1.2) ein zweites Drehmoment zugeführt wird,
   **dadurch gekennzeichnet,**
   **dass** das Zusatzaggregat (6) als elektrisch oder mechanisch angetriebener Kompressor ausgebildet ist, der stromab nach dem Ladelufteinlass (3.6) in den Haupteinströmkanal (3.3) eingebracht ist und mit dem Verdichter (3) und/oder über einen Kanal (2.6) mit der Turbine (2) aerodynamisch gekoppelt ist und der Haupteinströmkanal (3.3) des Verdichters (3) stromabwärts des Kompressors in einen axialen Einströmkanal (3.3a) und in einen Zusatzkanal (3.4) verzweigt.

2. Vorrichtung nach Anspruch 1,
   **dadurch gekennzeichnet,**
   **dass** der Kompressor (6) stromab nach dem Verdichter (3) in den Haupteinströmkanal (3.3) eingebracht ist.

3. Vorrichtung nach einem der vorhergehenden Ansprüche,
   **dadurch gekennzeichnet,**
   **dass** der Einströmkanal (3.3a) über eine Drosseleinrichtung (3.5) in seinem Querschnitt veränderbar ist.

4. Vorrichtung nach einem der vorhergehenden Ansprüche,
**dadurch gekennzeichnet,**
**dass** das Verdichterrad (3.1) im Eintrittsbereich axial und im Austrittsbereich radial ausgebildet ist.

5. Vorrichtung nach einem der vorhergehenden Ansprüche,
**dadurch gekennzeichnet,**
**dass** der axiale Zusatzkanal (3.4) in Strömungsrichtung vor dem Verdichterrad (3.1) in einen radialen Zusatzkanal (3.4a) mündet und im radialen Zusatzkanal (3.4a) ein wahlweise verstellbares, radial ausgebildetes Vorleitgitter (4) eingebracht ist.

6. Vorrichtung nach einem der vorhergehenden Ansprüche,
**dadurch gekennzeichnet,**
**dass** im Gehäuse (1.1) in Strömungsrichtung nach dem Verdichterrad (3.1) ein weiteres Stellelement vorgesehen ist, das als radiales, wahlweise verstellbares Diffusorgitter ausgebildet ist, wobei das Verdichterrad (3.1) ein Radialverdichterrad ist.

7. Vorrichtung nach einem der vorhergehenden Ansprüche,
**dadurch gekennzeichnet,**
**dass** die Abgasturbine (2) eine zur Drehachse (1.2a) des Turbinenrades (2.2) radiale Zuströmung (2.3) mit einem radialen Abgas-Vorleitgitter (2.3a) und/ oder eine axiale Zuströmung (2.4) mit einem axialen Abgas-Vorleitgitter (2.4a) aufweist und eines oder beide der Abgas-Vorleitgitter (2.3a, 2.4a) wahlweise verstellbar sind.

8. Vorrichtung nach einem der vorhergehenden Ansprüche,
**dadurch gekennzeichnet,**
**dass** die radiale Zuströmung (2.3) der Turbine (2) mittels eines änderbaren Turbinenquerschnitts (2.1) drosselbar ist.

9. Vorrichtung nach einem der vorhergehenden Ansprüche,
**dadurch gekennzeichnet,**
**dass** dem Abgasturbolader (1) ein Regel- oder Steuersystem (20) der Brennkraftmaschine (10) zugeordnet ist, das Regel- oder Steuersystem (20) eine Regel- und Steuereinheit (30) aufweist, die Istwertsignale (35) von der Brennkraftmaschine (10) und von mehreren Drucksensoren im Regel- oder Steuersystem (20) aufnimmt und die Regel- und Steuereinheit (30) ein oder mehrere Steuersignale (31, 32, 33, 34) an Steuereinrichtungen wie Abgas-Vorleitgitter (2.1), radiales Vorleitgitter (4), radiales Diffusorgitter, Zusatzaggregat (6), Drosseleinrichtung (7) und Abgasrückführungsventil (11) sendet.

10. Verfahren zum Regeln der Drehzahl des Abgasturboladers (1) nach Anspruch 1,
**dadurch gekennzeichnet, dass**

a) die Drehzahl des Abgasturboladers (1) innerhalb des Motorkennfeldes mittels des zweiten Drehmoments gehalten oder erhöht wird und
b) die Drehzahl des Abgasturboladers (1) durch Zuführen des zweiten Drehmoments maximal um 20 % von einer mittleren Solldrehzahl abweicht.

11. Verfahren nach Anspruch 10,
**dadurch gekennzeichnet, dass**
maximal 10 % der Verdichternennleistung durch das Zusatzaggregat (6) an den Abgasturbolader (1) abgegeben wird.

**Claims**

1. Variable exhaust gas turbocharger (1) for an internal combustion engine (10), with an exhaust gas turbine (2) of variable turbine cross section (2.1) and a compressor (3) having a radial preliminary guide blade cascade (4) in the suction-intake region, exhaust gas turbocharger (1) having a housing (1.1) with a main inflow duct (3.3) and a compressor wheel (3.1) which is connected to a turbine wheel (2.2) via a shaft (1.2), a first torque being supplied to the turbine wheel (2.2) by means of an exhaust gas stream, and exhaust gas turbocharger (1) being operatively connected to an additional assembly (6) with a charge air inlet (3.6) via which additional assembly a second torque is supplied to the exhaust gas turbocharger (1) via one or more components, such as the compressor wheel (3.1), turbine wheel (2.2) or shaft (1.2), **characterized in that** the additional assembly (6) is designed as an electrically or mechanically driven supercharger which is introduced, downstream of the charge air inlet (3.6), into the main inflow duct (3.3) and is coupled aerodynamically to the compressor (3) and/or, via a duct (2.6), to the turbine (2), and the main inflow duct (3.3) of the compressor (3) branches, downstream of the supercharger, into an axial inflow duct (3.3a) and into an additional duct (3.4).

2. Device according to Claim 1, **characterized in that** the supercharger (6) is introduced, downstream of the compressor (3), into the main inflow duct (3.3).

3. Device according to one of the preceding claims, **characterized in that** the inflow duct (3.3a) is variable in its cross section via a throttle device (3.5).

4. Device according to one of the preceding claims, **characterized in that** the compressor wheel (3.1) is designed axially in the inlet region and radially in the outlet region.

**5.** Device according to one of the preceding claims, **characterized in that** the axial additional duct (3.4) issues into a radial additional duct (3.4a) upstream of the compressor wheel (3.1) in the flow direction, and a selectively adjustable, radially designed preliminary guide blade cascade (4) is introduced in the radial additional duct (3.4a).

**6.** Device according to one of the preceding claims, **characterized in that** there is provided in the housing (1.1), downstream of the compressor wheel (3.1) in the flow direction, a further actuating element which is designed as a radial selectively adjustable diffuser cascade, the compressor wheel (3.1) being a radial compressor wheel.

**7.** Device according to one of the preceding claims, **characterized in that** the exhaust gas turbine (2) has an inflow (2.3) radial to the axis of rotation (1.2a) of the turbine wheel (2.2) and having a radial preliminary exhaust gas guide blade cascade (2.3a) and/or has an axial inflow (2.4) with an axial preliminary exhaust gas guide blade cascade (2.4a), and one or both of the preliminary exhaust gas guide blade cascades (2.3a, 2.4a) is or are selectively adjustable.

**8.** Device according to one of the preceding claims, **characterized in that** the radial inflow (2.3) of the turbine (2) can be throttled by means of a variable turbine cross section (2.1).

**9.** Device according to one of the preceding claims, **characterized in that** the exhaust gas turbocharger (1) is assigned a regulating or control system (20) of the internal combustion engine (10), the regulating or control system (20) has a regulating and control unit (30) which receives the actual-value signals (35) from the internal combustion engine (10) and from a plurality of pressure sensors in the regulating or control system (20), and the regulating and control unit (30) sends one or more control signals (31, 32, 33, 34) to control devices, such as the preliminary exhaust gas guide blade cascade (2.1), radial preliminary guide blade cascade (4), radial diffuser cascade, additional assembly (6), throttle device (7) and exhaust gas recirculation valve (11).

**10.** Method for regulating the rotational speed of the exhaust gas turbocharger (1) according to Claim 1, **characterized in that**

a) the rotational speed of the exhaust gas turbocharger (1) is held or increased within the engine characteristic map by means of the second torque, and
b) the rotational speed of the exhaust gas turbocharger (1) deviates at most by 20% from an average desired rotational speed by means of the supply of the second torque.

**11.** Method according to Claim 10, **characterized in that** at most 10% of the nominal compressor power is discharged to the exhaust gas turbocharger (1) by means of the additional assembly (6).

**Revendications**

**1.** Turbocompresseur de gaz d'échappement (1) variable pour un moteur à combustion interne (10), comprenant une turbine à gaz d'échappement (2) à section transversale de turbine (2.1) variable et un compresseur (3) avec une grille de prérotation (4) radiale dans la zone d'aspiration, le turbocompresseur de gaz d'échappement (1) présentant un boîtier (1.1) avec un conduit d'injection principal (3.3) et une roue de compresseur (3.1) reliée avec une roue de turbine (2.2) par le biais d'un arbre (1.2), un premier couple étant acheminé à la roue de turbine (2.2) au moyen d'un courant de gaz d'échappement, le turbocompresseur de gaz d'échappement (1) étant en liaison active avec un groupe supplémentaire ayant une entrée d'air de charge (3.6) par le biais duquel un deuxième couple est acheminé au turbocompresseur de gaz d'échappement (1) par l'intermédiaire d'un ou de plusieurs composants comme la roue de compresseur (3.1), la roue de turbine (2.2) ou l'arbre (1.2) ; **caractérisé en ce que** le groupe supplémentaire (6) est réalisé sous la forme d'un compresseur à entraînement électrique ou mécanique qui est installé dans le conduit d'injection principal (3.3) en aval après l'entrée d'air de charge (3.6) et qui est connecté de manière aérodynamique avec le compresseur (3) et/ou avec la turbine (2) par le biais d'un conduit (2.6) et le conduit d'injection principal (3.3) du compresseur (3) se divise en aval du compresseur en un conduit d'injection axial (3.3a) et un conduit supplémentaire (3.4).

**2.** Dispositif selon la revendication 1, **caractérisé en ce que** le compresseur (6) est installé dans le conduit d'injection principal (3.3) en aval après le compresseur (3).

**3.** Dispositif selon l'une des revendications précédentes, **caractérisé en ce que** la section transversale du conduit d'injection (3.3a) peut être modifiée par le biais d'un dispositif étrangleur (3.5).

**4.** Dispositif selon l'une des revendications précédentes, **caractérisé en ce que** la roue du compresseur (3.1) présente une configuration axiale dans la zone d'entrée et une configuration radiale dans la zone de sortie.

**5.** Dispositif selon l'une des revendications précédentes, **caractérisé en ce que** le conduit supplémentaire axial (3.4) débouche dans un conduit supplémentaire radial (3.4a) avant la roue de compresseur (3.1) dans le sens de l'écoulement et une grille de prérotation (4) à configuration radiale et positionnable à volonté est insérée dans le conduit supplémentaire radial (3.4).

6. Dispositif selon l'une des revendications précédentes, **caractérisé en ce qu'**un autre élément de commande est prévu dans le boîtier (1.1) après la roue de compresseur (3.1) dans le sens de l'écoulement, lequel est réalisé sous la forme d'une grille de diffuseur radiale positionnable à volonté, la roue de compresseur (3.1) étant une roue de compresseur radial.

7. Dispositif selon l'une des revendications précédentes, **caractérisé en ce que** la turbine à gaz d'échappement (2) présente une arrivée de courant (2.3) radiale par rapport à l'axe de rotation (1.2a) de la roue de turbine, comprenant une grille de prérotation de gaz d'échappement radiale (2.3a) et/ou une arrivée de courant axiale (2.4) munie d'une grille de prérotation de gaz d'échappement axiale (2.4a) et l'une ou les deux grilles de prérotation de gaz d'échappement (2.3a, 2.4a) sont positionnables à volonté.

8. Dispositif selon l'une des revendications précédentes, **caractérisé en ce que** l'arrivée de courant (2.3) radiale de la turbine (2) peut être étranglée au moyen d'une section transversale variable de turbine (2.1).

9. Dispositif selon l'une des revendications précédentes, **caractérisé en ce qu'**un système de régulation et/ou de commande (20) du moteur à combustion interne est associé au turbocompresseur de gaz d'échappement (1), le système de régulation et/ou de commande (20) présente une unité de régulation et de commande (30) qui enregistre les signaux de valeur réelle (35) du moteur à combustion interne (10) et de plusieurs capteurs de pression dans le système de régulation et/ou de commande (20) et l'unité de régulation et de commande (30) envoie un ou plusieurs signaux de commande (31, 32, 33, 34) à des dispositifs de commande tels qu'une grille de prérotation de gaz d'échappement (2.1), une grille de prérotation radiale (4), une grille de diffuseur radiale, un groupe supplémentaire (6), un dispositif d'étranglement (7) et une vanne de retour des gaz d'échappement (11).

10. Procédé de régulation de la vitesse de rotation du turbocompresseur de gaz d'échappement (1) selon la revendication 1, **caractérisé en ce que**

   a) la vitesse de rotation du turbocompresseur de gaz d'échappement (1) est maintenue à l'intérieur du diagramme caractéristique du moteur au moyen du deuxième couple ou est augmentée et

   b) la vitesse de rotation du turbocompresseur de gaz d'échappement (1), en acheminant le deuxième couple, diffère au maximum de 20 % d'une vitesse de rotation de consigne moyenne.

11. Procédé selon la revendication 10, **caractérisé en ce qu'**un maximum de 10 % de la puissance nominale du compresseur est délivré au turbocompresseur de gaz d'échappement (1) par le groupe supplémentaire (1).

**Fig.1**

**Fig.2**

**Fig.3**

**Fig.4**

**Fig.5**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19955508 C1